# EUROPEAN PATENT APPLICATION

(11) **EP 1 830 248 A1**
(43) Date of publication of application: **05.09.2007**
(21) Application number: 07250888.0
(22) Date of filing: 02.03.2007
(51) Int. Cl.: G06F 3/048

(54) **Touch screen system and method for interacting with the same**

(30) Priority: 02.03.2006 US 365831
(71) Applicant: Smart Technologies, Inc., Calgary, Alberta T3C 0M5 (CA)
(72) Inventor: Van Leperen, Taco, Calgary, Alberta T2T 0H5 (CA)
(74) Representative: Naismith, Robert Stewart

(57) **Abstract**

A method of manipulating an object displayed on a touch screen of an interactive input system comprises contacting the displayed object to be manipulated with a pointer and moving the pointer on the touch surface thereby to manipulate the object. Pointer up events that occur during the pointer move resulting from inadvertent lost contact between the pointer and the touch surface are disregarded.

## Description

### Field of the Invention

The present invention relates generally to interactive input or touch systems and in particular, to a touch system and method of interacting with the same.

### Background of the Invention

Touch systems are well known in the art and typically include a touch screen having a touch surface on which contacts are made using a pointer in order to generate user input. Pointer contacts with the touch surface are detected and are used to generate corresponding output depending on areas of the touch surface where the contacts are made. Common touch systems utilize analog resistive, electromagnetic, capacitive, acoustic or machine vision to identify pointer interactions with the touch surface.

For example, International PCT Application No. PCT/CA01/00980 filed on July 5, 2001 and published under No. WO 02/03316 on January 10, 2002, assigned to SMART Technologies Inc., assignee of the present invention, discloses a camera-based touch system comprising a touch screen that includes a passive touch surface on which a computer-generated image is presented. A rectangular bezel or frame surrounds the touch surface and supports digital cameras at its corners. The digital cameras have overlapping fields of view that encompass and look across the touch surface. The digital cameras acquire images from different locations and generate image data. Image data acquired by the digital cameras is processed by digital signal processors to determine if a pointer exists in the captured image data. When it is determined that a pointer exists in the captured image data, the digital signal processors convey pointer characteristic data to a master controller, which in turn processes the pointer characteristic data to determine the location of the pointer in (x,y)-coordinates relative to the touch surface using triangulation. The pointer coordinate data is conveyed to a computer executing one or more applications programs. The computer uses the pointer coordinate data to update the computer-generated image that is presented on the touch surface. Pointer contacts on the touch surface can therefore be recorded as writing or drawing or used to control execution of applications programs executed by the computer.

In many environments such as in teaching institutions, large scale touch systems are desired so that visible presentations can be made to large groups. To satisfy this need, a large scale touch system as disclosed in U.S. Patent Application Serial No. 10/750,219 to Hill et al. and assigned to SMART Technologies Inc., assignee of the subject application, has been developed. This large scale touch system includes a touch surface divided into a plurality of coordinate input sub-regions. The input sub-regions overlap to define a generally contiguous input surface. Each coordinate input sub-region generates pointer coordinate data in response to pointer contacts thereon. The pointer coordinate data is processed to update image data presented on the input surface. When a pointer contact is made on a coordinate input sub-region that does not overlap with an adjacent coordinate input sub-region, the coordinate input sub-region processes acquired images to derive pointer data and triangulates the position of the pointer using the derived pointer data thereby to determine the position of the pointer contact relative to the touch surface. When a pointer contact is made on a coordinate input sub-region that overlaps with an adjacent coordinate input sub-region, each overlapping coordinate input sub-regions processes acquired images to derive pointer data and triangulates the position of the pointer using the derived pointer data. Thereafter, the triangulated positions generated by the overlapping coordinate input sub-regions are processed in accordance with defined logic thereby to determine the position of the pointer contact relative to the touch surface.

The above-noted Hill et al. large scale touch system provides a contiguous touch surface making it extremely useful in environments where the touch surface is to be viewed by larger groups.

As will be appreciated, large and very large touch surfaces can present challenges especially in situations where users cannot readily physically interact with the touch surfaces. For example, children often have problems maintaining steady pointer contacts on larger touch surfaces. This makes the task of moving and repositioning i.e. dragging, displayed objects such as icons, windows, tool bars etc. very difficult. If during such an object move task, the pointer loses contact with the touch surface one or a number of times over the move, the loss in pointer contact may result in the object drag operation being terminated, an accidental double-click event occurring or an object resizing occurring. As a result, methods to improve interactions with displayed objects are desired.

It is therefore an object of the present invention to provide a novel touch system and method of interacting with the same.

### Summary of the Invention

Accordingly, in one aspect there is provided in a touch system having a touch surface on which a displayed image is visible, a method of facilitating user interaction with said displayed image during a displayed object manipulation comprising:
detecting inadvertent pointer up conditions during a pointer movement on said touch surface; and
disregarding the detected inadvertent pointer up conditions so that a continuous pointer movement is processed.

In one embodiment, during the detecting, pointer up events followed quickly by pointer down events are detected as inadvertent pointer up conditions. In another embodiment, pointer up events followed by pointer down events within the displayed object are detected as inadvertent pointer up conditions. In yet another embodiment, pointer up events that are followed by proximal pointer down events are detected as inadvertent pointer up conditions.

According to another aspect there is provided in a method of manipulating an object visible on a touch screen of an interactive input system comprising:
contacting the object to be manipulated with a pointer and moving the pointer on the touch surface thereby to manipulate said object; and
disregarding pointer up events that occur during the pointer move resulting from inadvertent lost contact between said pointer and said touch surface.

In one embodiment, a pointer up event is disregarded when the pointer up event is followed by a pointer down event still within the boundary of the object. In this embodiment, the object is generally centered on the point of pointer contact. In another embodiment, a pointer up event is disregarded when the pointer up event is quickly followed by a pointer down event. In yet another embodiment, a pointer up event is disregarded when the pointer up event is followed by a proximal pointer down event.

According to yet another aspect there is provided a touch system comprising:
a touch surface on which an image is visible, said image including at least one object;
first structure to detect contact of a pointer on said touch surface; and
processing structure communicating with said first structure and processing pointer contact data, said processing structure examining said pointer contact data and disregarding spurious pointer up events resulting from inadvertent loss of pointer contact with said touch surface during object manipulations.

According to still yet another aspect there is provided in a touch system responsive to pointer contacts on a touch surface on which an image including at least one displayed object is visible, the improvement comprising:
a spurious pointer up event detector examining pointer contact information generated as a result of pointer interaction with said touch surface, said detector disregarding spurious pointer up events during object manipulations to inhibit the spurious pointer up events from being processed.

The touch surface interaction method provides advantages in that accidental pointer up events occurring during an object manipulation can be discarded thereby inhibiting subsequent pointer down events from being interpreted as new events that may interrupt the object manipulation. This of course facilitates interaction with objects displayed on the touch surface making the touch system more user friendly especially for younger users.

### Brief Description of the Drawings

Embodiments will now be described more fully with reference to the accompanying drawings in which:
Figure 1 is a schematic diagram of a camera-based touch system;
Figure 2 is a front plan view of a touch screen forming part of the touch system of Figure 1;
Figures 3 and 4 are flow charts showing the steps performed during handling of a displayed object move event; and
Figures 5 and 6 are flow charts showing alternate steps performed during handling of a displayed object move event.

### Detailed Description of the Embodiments

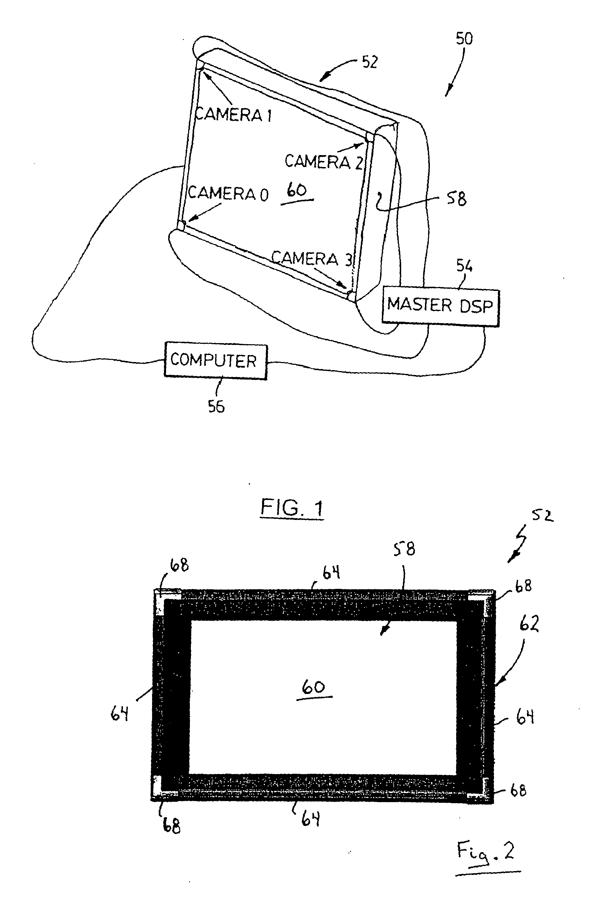

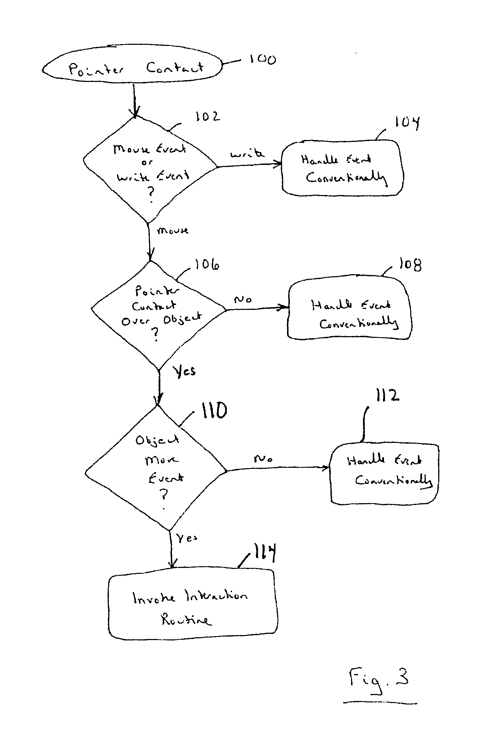

Referring now to Figures 1 and 2, a camera-based touch system is shown and is generally identified by reference numeral 50. Camera-based touch system 50 is very similar to that disclosed in previously referenced International PCT Application Serial No. WO 02/03316, assigned to SMART Technologies Inc., assignee of the subject application, the content of which is incorporated herein by reference.

As can be seen, touch system 50 includes a touch screen 52 coupled to a digital signal processor (DSP)-based master controller 54. Master controller 54 is also coupled to a computer 56. Computer 56 executes one or more application programs and provides computer-generated image output to a display device, in this case, a high definition television 58. Display device 58 in turn presents a computer-generated image that is visible on the surface 60 of the touch screen 52. The touch screen 52, master controller 54, computer 56 and display device 58 form a closed-loop so that pointer contacts on the touch screen 52 can be recorded as writing or drawing or used to control execution of application programs executed by the computer 56.

The touch surface 60 is bordered by a bezel or frame 62 such as that disclosed in U.S. Patent No. 6,972,401 to Akitt et al. issued on December 6, 2005, assigned to SMART Technologies, Inc. assignee of the subject application, the content of which is incorporated herein by reference. DSP-based digital cameras 66 are provided at each corner of the bezel 62. Each digital camera 66 is mounted so that its field of view encompasses and looks generally across the entire touch surface 60.

During operation of the touch system 50, the digital cameras 66, which look across the touch surface 60, acquire images. Image data acquired by each digital camera 66 is processed by that digital camera to determine if a pointer exists in the captured image. When it is determined that a pointer exists in the captured image, the digital camera 66 generates pointer characteristic data identifying the pointer position in the acquired image. The pointer characteristic data generated by each digital camera 66 is then conveyed to the master controller 54, which in turn processes the pointer characteristic data to determine the location of the pointer in (x,y)-coordinates relative to the touch surface 60 using triangulation.

In particular, when a pointer contact is made on the touch surface 60, the images captured by the digital cameras 66 are processed by the digital cameras 66 and the master controller 54 in the manner described in U.S. Patent No. 6,954,197 to Morrison et al. issued on October 4, 2005, assigned to SMART Technologies Inc., assignee of the subject application, the content of which is incorporated by reference. In this manner, a bounding box surrounding the pointer contact on the touch surface 60 is determined allowing the location of the pointer in (x,y)-coordinates to be calculated.

The pointer coordinate data is then reported to the computer 56, which in turn records the pointer coordinate data as writing or drawing if the pointer contact is a write event or injects the pointer coordinate data into the active application program being run by the computer 56 if the pointer contact is a mouse event.

In general, to determine if a pointer contact is a write event or a mouse event, the tool type and point of first contact is examined. If a drawing tool is used to make the contact and the contact is within a designated writing area within the image visible on the touch surface 60, the pointer contact is treated as a write event; otherwise the pointer contact is treated as a mouse event.

When a user interacts with the touch surface 60, due to the size of the touch surface 60, depending on the physical size and/or condition of the user, difficulties may arise during interaction with displayed objects. For example, in the case of young and/or small users, it has been found that such users often have difficulty maintaining contact with the touch surface 60 during an object move event, which requires the pointer to be dragged across the touch surface 60 to effect the object move.

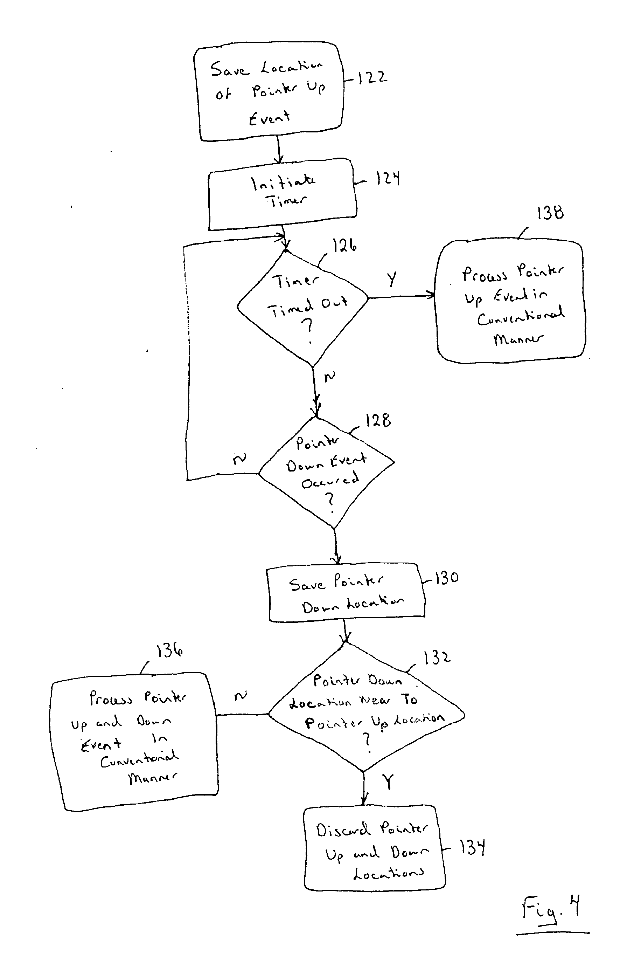

To deal with this problem, the master controller 54 and computer 56 execute a touch surface interaction routine that interacts with the touch screen driver loaded on the computer 56 to facilitate user interaction with the touch surface 60 during large object move events. The interaction routine will now be described with reference to Figures 3 and 4.

When a pointer is brought into contact with the touch surface 60 (step 100), the pointer contact is examined to determine if it is a write event or a mouse event (step 102). If the pointer contact is a write event, the write event is sent to the driver and processed by the computer 56 in a conventional manner (step 104). If the pointer contact is a mouse event, the pointer contact location is examined to determine if the pointer contact location is over a displayed object (step 106). If the pointer contact is not over a displayed object, the mouse event is sent to the driver and processed by the computer 56 in a conventional manner (step 108).

If the pointer contact is over a displayed object, a check is made to determine if the pointer is being dragged across the touch surface 60 (step 110), signifying an object move event. If a pointer move event is not detected, the mouse event is sent to the driver and processed by the computer 56 in a conventional manner (step 112). If at step 110, a pointer move is detected, the driver is conditioned to a filter mode so that pointer events are processed by the driver before being sent to the computer 56 (step 114).

In the filter mode, if a pointer up event occurs, i.e. a loss of pointer contact with the touch surface 60, during the object move, the location of the pointer up event is saved by the driver (step 122). A timer is then initiated (step 124) and a check is made to determine if the timer has timed out (step 126). If the timer has not timed out, a check is made to determine if a pointer down event has occurred (step 128). If a pointer down event has not occurred, the interaction routine reverts back to step 126.

If at step 128, a pointer down event has occurred, the pointer down location is saved by the driver (step 130) and then examined to determine if it is near to the saved pointer up location (step 132). If so, the pointer up location is discarded and the pointer down event location is cleared (step 134). In this manner, if a pointer drag is interrupted by a pointer up event that is followed quickly by a proximate pointer down event, the pointer up event and subsequent pointer down event are discarded by the driver as being spurious. At step 132, if the pointer down location is too far from the saved pointer up location, the saved pointer up event and saved pointer down event are output by the driver and processed by the computer 56 in the conventional manner (step 136). Also, at step 126, if a timed out condition is determined, the pointer up event is output by the driver and processed by the computer 56 in the conventional manner (step 138).

The time out value of the timer is selected to enable the driver to distinguish spurious pointer up events from intentional pointer up events. A time out value equal to 500msec is believed to achieve this although this value may be adjusted as desired to increase or decrease sensitivity to spurious pointer up events.

As will be appreciated, as spurious pointer up events and subsequent pointer down events are discarded by the driver, they are not processed by the computer 56 and thus, accidental pointer up and pointer down events do not adversely affect an object move event. This technique is used when an object move event has commenced so that intentional pointer up and down events that are quick in succession, as can happen during writing of dashed lines, are not inhibited by this technique.

Rather than examining the time elapsed between successive pointer up and pointer down events in order to detect spurious pointer up events (i.e. if the timer has timed out), the movement vector between successive pointer up and pointer down events can be examined by the driver. In cases where a subsequent pointer down event is close to a previous pointer contact and is generally in line with the direction of travel of the pointer during the object move, the pointer up event can be designated as spurious. A subsequent pointer contact that is spaced far from a previous pointer contact or offset from the direction of travel of the pointer is unlikely to form part of an object move event.

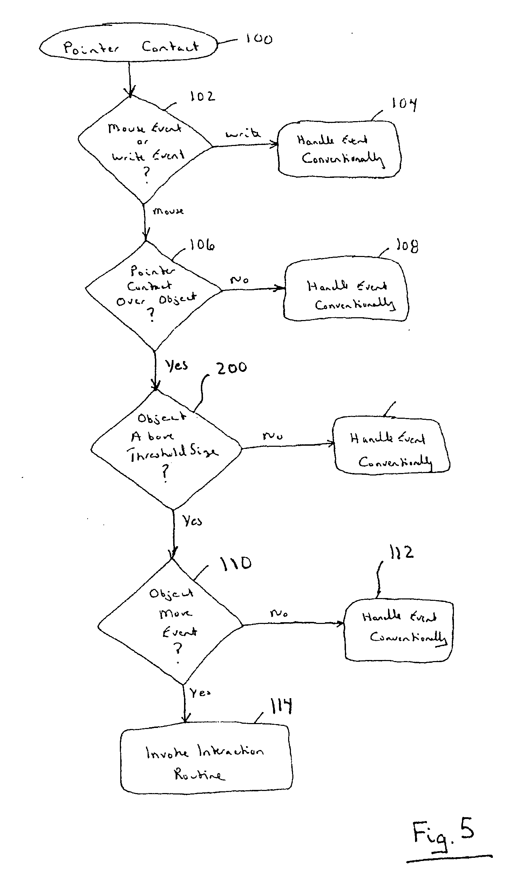

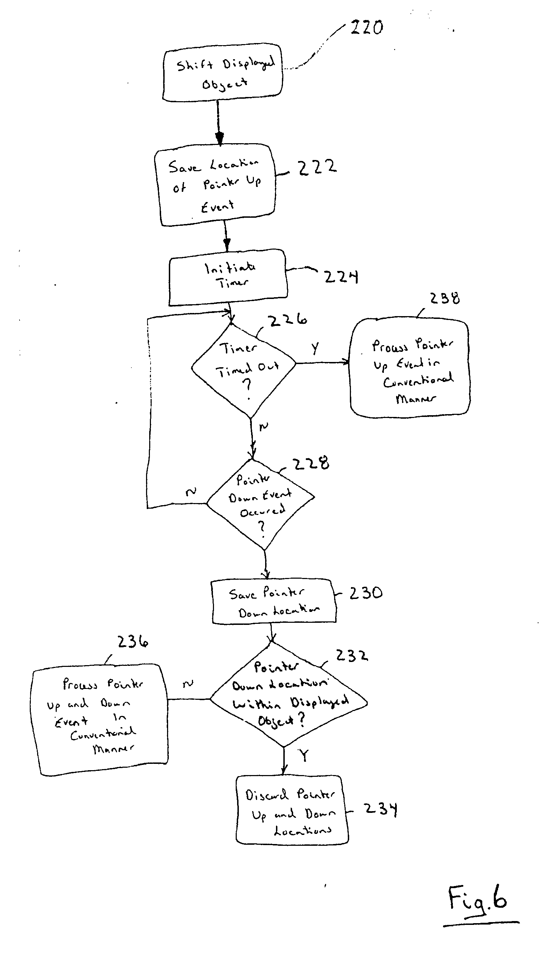

Turning now to Figures 5 and 6, an alternative embodiment of the interaction routine is illustrated. As can be seen, in this embodiment, at step 106, if the pointer contact is on a displayed object, the size of the displayed object is examined to determine if it is above a threshold size (step 200). In this embodiment, a displayed object encompassing at least 100 pixels is considered to be above the threshold size although those of skill in the art will appreciate that the threshold size can be set to basically any desired value. If the displayed object is not above the threshold size, the mouse event is sent to the driver and processed by the computer 56 in a conventional manner (step 200). If the displayed object is above the threshold size, a check is made to determine if the pointer is being dragged across the touch surface, signifying an object move event (step 110).

When the driver is conditioned to the filter mode, the center of the displayed object is shifted so that it corresponds to the pointer contact location (step 220). If a pointer up event occurs during the object move, the location of the pointer up event is saved (step 222). A timer is then initiated (step 224) and a check is made to determine if the timer has timed out (step 226). If the timer has not timed out, a check is made to determine if a pointer down event has occurred (step 228). If a pointer down event has not occurred, the interaction routine reverts back to step 226.

If at step 228 a pointer down event has occurred, the pointer down location is saved (step 230). The pointer down location is then checked to determine if it is within the displayed object (step 232). If the pointer down location is within the displayed object being moved, the pointer up event is deemed to be accidental and the pointer up and pointer down events are discarded by the driver so that they are not processed by the computer 56 (step 234). In this manner, accidental pointer up conditions during object move events do not affect the object move process. At step 232, if the pointer down location is outside of the displayed object, the saved pointer up and pointer down events are processed in the conventional manner (step 236). Also, at step 226, if a timed out condition is determined, the pointer up event is processed in the conventional manner (step 238). Ensuring that the displayed object is centered on the pointer contact location helps to provide a buffer area in which accidental pointer up conditions can be rectified. As will be appreciated, larger objects provide larger buffer areas.

The above-described interaction methods help to avoid accidental loss of contacts with the touch surface 60 from affecting object moves. This makes interacting with large touch surfaces easier for individuals of virtually all sizes and conditions.

If desired, the above interaction methods can be used in conjunction, with the second interaction method being used during handling of displayed objects above the threshold size and the first interaction method being used during handling of displayed objects equal to or less than the threshold size.

In the above description particular reference to object move events is made. Those of skill in the art will however appreciate that the methods disclosed herein may be employed during other object manipulations, such as for example, object resizes, object rotations, etc. wherein spurious pointer up events during such object manipulations may occur.

In the above embodiments, a particular hardware configuration is shown. Those of skill in the art will appreciate that the interaction methods can be used with other touch system configurations. The image data captured by the cameras can be processed by the master controller 54 or by the computer 56 to determine pointer contact locations. The pointer may be a passive or an active pointing device.

The interaction methods can be used in basically any touch surface environment having the facility to enable a user to manipulate displayed objects such as for example, the very large scale touch system disclosed in previously referenced U.S. Patent Application No. 10/750,219 to Hill et al. and the system disclosed in U.S. Patent Application No. 10/838,536 to Morrison et al. The touch system need not however be camera-based. The interaction methods can be used during manipulation of objects displayed on analog resistive, electromagnetic, capacitive or acoustic touch screens.

Although embodiments have been described above, those of skill in the art will also appreciate that variations and modifications may be made without departing from the spirit and scope thereof as defined by the appended claims.

## Claims

1. In a touch system having a touch surface on which a displayed image is visible, a method of facilitating user interaction with said displayed image during a displayed object manipulation comprising:
detecting inadvertent pointer up conditions during a pointer movement on said touch surface; and
disregarding the detected inadvertent pointer up conditions so that a continuous pointer movement is processed.

2. The method of claim 1 wherein during said detecting, pointer up events followed quickly by pointer down events are detected as inadvertent pointer up conditions.

3. The method of claim 1 wherein during said detecting, pointer up events followed by pointer down events within the displayed object are detected as inadvertent pointer up conditions.

4. The method of claim 1 wherein during said detecting, pointer up events followed by proximal pointer down events are detected as inadvertent pointer up conditions.

5. The method of claim 2 wherein during said detecting, pointer up conditions followed quickly by proximal pointer down conditions are detected as inadvertent pointer up conditions.

6. The method of claim 5 wherein said detecting comprises initiating a timer when a pointer up condition occurs and detecting an inadvertent pointer up condition when a subsequent proximal pointer down condition occurs within a threshold period of time.

7. The method of claim 4 wherein said detecting comprises examining the movement vector of said pointer when a pointer up and subsequent pointer down condition occurs, the pointer up condition being detected as an inadvertent pointer up condition when the subsequent pointer down condition is proximate to the pointer up condition and generally in line with the pointer movement prior to said pointer up condition.

8. A method of manipulating an object visible on a touch screen of an interactive input system comprising:
contacting the visible object to be manipulated with a pointer and moving the pointer on the touch surface thereby to manipulate said object; and
disregarding pointer up events that occur during the pointer move resulting from inadvertent lost contact between said pointer and said touch surface.

9. The method of claim 8 wherein a pointer up event is disregarded when the pointer up event is followed by a pointer down event still within the boundary of said object.

10. The method of claim 9 further comprising, following said contacting, generally centering the object on the point of pointer contact.

11. The method of claim 8 wherein a pointer up event is disregarded when the pointer up event is quickly followed by a pointer down event.

12. The method of claim 8 wherein a pointer up event is disregarded when the pointer up event is followed by a proximal pointer down event.

13. The method of claim 11 wherein a pointer up event is disregarded when the pointer up event is quickly followed by a proximal pointer down event.

14. The method of claim 12 wherein a pointer up event is disregarded when the pointer up event is followed by a proximal pointer down event that is generally in line with the movement of the pointer prior to the pointer up event.

15. A touch system comprising:
a touch surface on which an image is visible, said image including at least one object;
first structure to detect contact of a pointer on said touch surface; and
processing structure communicating with said first structure and processing pointer contact data, said processing structure examining said pointer contact data and disregarding spurious pointer up events resulting from inadvertent loss of pointer contact with said touch surface during object manipulations.

16. A touch system according to claim 15 wherein said processing structure designates pointer up events followed quickly by pointer down events as spurious pointer up events.

17. A touch system according to claim 16 wherein said processing structure designates pointer up events followed quickly by proximal pointer down events as spurious pointer up events.

18. In a touch system responsive to pointer contacts on a touch surface on which an image including at least one displayed object is visible, the improvement comprising:
a spurious pointer up event detector examining pointer contact information generated as a result of pointer interaction with said touch surface, said detector disregarding spurious pointer up events during object manipulations to inhibit the spurious pointer up events from being processed.
